Europäisches Patentamt

European Patent Office

Office européen des brevets

(11) Veröffentlichungsnummer: **0 209 612**
**A1**

## (12) EUROPÄISCHE PATENTANMELDUNG

(21) Anmeldenummer: 85109110.8

(22) Anmeldetag: 20.07.85

(51) Int. Cl.⁴: **H04N 5/33** , H04N 5/30

(43) Veröffentlichungstag der Anmeldung:
28.01.87 Patentblatt 87/05

(84) Benannte Vertragsstaaten:
AT CH DE FR GB IT LI

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth(DE)**

(72) Erfinder: **Rumland, Rainer, Dipl.-Ing. (FH)**
**Irmgardstrasse 12**
**D-8501 Rosstal(DE)**

(54) Fernsehkamera.

(57) Es wird eine Fernsehkamera beschrieben, die eine Auswertung eines aufgenommenen Objektes hinsichtlich vom menschlichen Auge nicht ohne weiteres wahrnehmbarer Veränderungen zuverlässig ermöglicht. Dies wird dadurch erreicht, daß wenigstens ein Spektralbereich im sichtbaren Bereich und wenigstens ein Spektralbereich im unsichtbaren Bereich liegt. Vorteilhafterweise liegen der oder die unsichtbaren Bereiche im Infraroten oder Ultravioletten.

EP 0 209 612 A1

## FERNSEHKAMERA

Die Erfindung bezieht sich auf eine Fernsehkamera gemäß den Merkmalen des Oberbegriffs des Patentanspruchs 1.

Schwarzweiß-und Farbfernsehkameras werden heutzutage für die unterschiedlichsten Anwendungszwecke verwendet, wozu die Fernsehkamera entsprechend ausgerüstet und mit eventuell erforderlichem zusätzlichem Zubehör versehen ist. Ein wichtiges und an Bedeutung zunehmendes Anwendungsgebiet ist hierbei beispielsweise das der Überwachung im Bereich von Wissenschaft und Technik sowie des Objektschutzes und ferner im Zusammenhang mit Umweltschutz für die Erkennung von Pflanzenkrankheiten, Untersuchungen in der Forstwirtschaft, Schädlingsbekämpfung, u.ä..

Für Sicherungsanlagen sind daher Fernsehkameras bekannt, deren fotoelektrisch empfindlicher Sensor eine infrarot-empfindliche Bildaufnahmeröhre ist.

Auch sind für das Anwendungsgebiet Umwelt- und Pflanzenschutz Infrarot-Farbfilme bekannt, die die mit dem menschlichen Auge nicht sichtbare Infrarotstrahlung aufzuzeichnen und wiederzugeben vermögen, da solche Filme im Gegensatz zum normalen Farbfilm nicht für Blau, Grün und Rot, sondern für Grün, Rot und Infrarot sensibilisiert sind.

Der Erfindung liegt die Aufgabe zugrunde, eine Fernsehkamera der eingangs genannten Art so auszubilden, daß sie eine Auswertung des aufgenommenen Objektes hinsichtlich vom menschlichen Auge nicht ohne weiteres wahrnehmbarer Veränderungen zuverlässig ermöglicht.

Diese Aufgabe wird erfindungsgemäß mit den im kennzeichnenden Teil des Patentanspruchs 1 angegebenen Maßnahmen gelöst.

Weitere Ausgestaltungen der erfindungsgemäßen Fernsehkamera ergeben sich aus den Unteransprüchen 2 bis 9.

Die Erfindung wird im folgenden unter Bezugnahme auf die Zeichnungsfigur beispielsweise näher erläutert, in der eine Dreiröhren-Kamera dargestellt ist. Das vom Objekt entworfene optische Bild wird durch ein Objektiv 1 der nicht näher dargestellten Kamera mit Hilfe eines optischen Strahlenteilers 2 in verschiedene spektrale Bereiche aufgespalten. Der optische Strahlenteiler leitet dabei den Grün-Anteil des aufgenommenen Objektbildes auf eine Vidikon-Bildaufnahmeröhre 3, deren Fotoschicht für den grünen Bereich des Spektrums des Objektbildes empfindlich ist. Ebenso wird das Licht des Rot-Anteils des aufgenommenen Objekts auf eine für den roten Spektralbereich empfindliche Vidikon-Bildaufnahmeröhre 4 geleitet. Der Strahlenteiler 2 ist ferner so ausgebildet, daß eine dritte Bildaufnahmeröhre den Infrarot-Anteil des aufgenommenen Objektbildes erhält. Die dritte Bildaufnahmeröhre gemäß Zeichnungsfigur ist demzufolge eine infrarotempfindliche Vidikon-Bildaufnahmeröhre 5, in der ebenso wie bei den beiden anderen Bildaufnahmeröhren 3 und 4 die Videosignale entsprechend dem jeweiligen Spektralbereich erzeugt werden.

Die Videosignale der Bildaufnahmeröhren 3, 4 und 5 werden anschließend einer Farbaufbereitungsschaltung 6 zugeführt, in der dann aus den Signalspannungen $U_R$, $U_G$ und $U_{IR}$ die Signale für die Primärfarben der Farbwiedergabe Rot (R), Grün (G) und Blau (B) erzeugt werden. Diese Signale können anschließend nach entsprechender Weiterverarbeitung beispielsweise auf einem Monitor oder Fernsehgerät dargestellt oder auf einem Videoaufzeichnungs-und Wiedergabegerät aufgezeichnet werden.

Die erfindungsgemäße Fernsehkamera stellt also eine Falschfarbenkamera dar, bei der ein oder mehrere Spektralbereiche im sichtbaren Bereich und ein oder mehrere Spektralbereiche im unsichtbaren Bereich liegen. Der unsichtbare Bereich kann dabei im Infraroten oder Ultravioletten liegen. Je nach Anwendungsfall kann die Falschfarben-Darstellung mit unterschiedlichen Farbkombinationen durch geeignete Matrizierung gewählt werden. Vorteilhaft erweist sich, daß das Verhältnis der wiedergegebenen Farben in der Intensität zueinander verändert werden kann, um die Bilder besonders informativ zu gestalten.

Um charakteristische Spektralbereiche besonders gut darzustellen, können in die verschiedenen Strahlengänge zu den Sensoren bzw. Bildaufnahmeröhren je nach Anwendungsfall schmalbandige optische Filter eingeschaltet werden, was durch die Filter 7 in der Zeichnungsfigur dargestellt ist.

Anstelle der im vorstehenden Beispiel beschriebenen Dreiröhren-Kamera kann die Erfindung ohne weiteres auch bei Fernsehkameras angewendet werden, bei denen das Bild des Objekts im jeweiligen Spektralbereich auf Halbleiter-Flächensensoren abgebildet wird. Die Verwendung von Zeilensensoren ist ebenfalls möglich, sofern in bekannter Weise eine Abtastung durch mechanische Mittel erfolgt. Bei dieser langsam erfolgenden Abtastung bei Zeilensensoren wird ein Bildspeicher zwischengeschaltet, in den die Bildinformation bekanntermaßen langsam eingeschrieben und schnell ausgelesen werden kann derart, daß eine flimmerfreie Wiedergabe auf einem Fernsehbildschirm möglich ist.

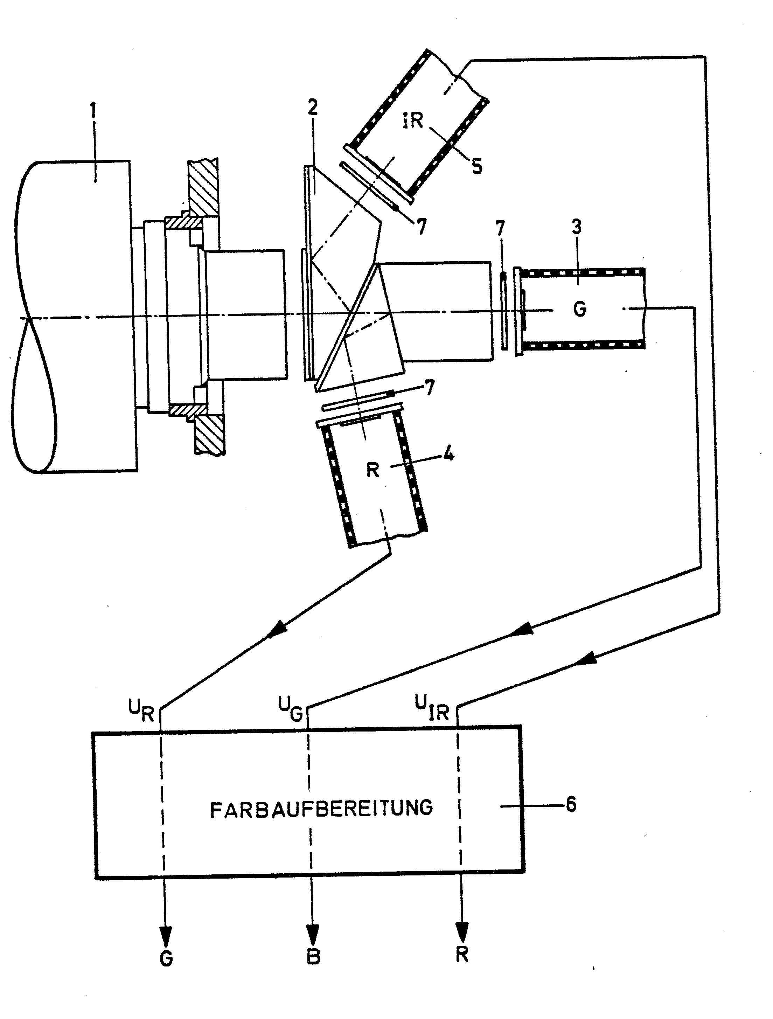

**Ansprüche**

1. Fernsehkamera mit einem Aufnahmeobjektiv und mit einem optischen Strahlenteiler zur Aufteilung des einfallenden Lichtes des aufgenommenen Bildes in verschiedene spektrale Bereiche, deren Bilder auf jeweils einem fotoelektrisch empfindlichen Sensor abgebildet und jeweils in ein Videosignal umgewandelt werden, **dadurch gekennzeichnet,** daß wenigstens ein Spektralbereich im sichtbaren Bereich und wenigstens ein Spektralbereich im unsichtbaren Bereich liegt.

2. Fernsehkamera nach Anspruch 1, **dadurch gekennzeichnet,** daß der oder die unsichtbaren Bereiche im Infraroten liegen.

3. Fernsehkamera nach Anspruch 1, **dadurch gekennzeichnet,** daß der oder die unsichtbaren Bereiche im Ultravioletten liegen.

4. Fernsehkamera nach Anspruch 1, 2 oder 3, **dadurch gekennzeichnet,** daß bei der Wiedergabe aufgenommener Objekte der oder die unsichtbaren Bereiche in sichtbare Bereiche umgesetzt werden.

5. Fernsehkamera nach einem der vorhergehenden Ansprüche 1 bis 4, **dadurch gekennzeichnet,** daß das Verhältnis der wiedergegebenen Farben in der Intensität zueinander verändert werden kann.

6. Fernsehkamera nach einem der vorhergehenden Ansprüche 1 bis 5, **dadurch gekennzeichnet,** daß in die verschiedenen Strahlengänge zu den Sensoren je nach Anwendungsfall - schmalbandige optische Filter eingeschaltet werden.

7. Fernsehkamera nach einem der vorhergehenden Ansprüche 1 bis 6, **dadurch gekennzeichnet,** daß das Bild des Objektes im jeweiligen Spektralbereich auf Halbleiter-Flächensensoren abgebildet wird.

8. Fernsehkamera nach einem der vorhergehenden Ansprüche 1 bis 6, **dadurch gekennzeichnet,** daß das Bild des Objektes im jeweiligen Spektralbereich auf einem Zeilensensor abgebildet und in bekannter Weise durch mechanische Mittel abgetastet wird.

9. Fernsehkamera nach einem der vorhergehenden Ansprüche 1 bis 8, **dadurch gekennzeichnet,** daß das Bild des aufgenommenen Objektes im jeweiligen Spektralbereich auf Bildaufnahmeröhren, vorzugsweise Röhren vom Vidikontyp, abgebildet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | US-A-3 571 504 (KIUCHI et al.) <br><br> * Spalte 1, Zeilen 8-61; Spalte 2, Zeilen 8-49; Figur 1 * | 1,2,4, 6,9 | H 04 N 5/33 <br> H 04 N 5/30 |
| A | | 3,5,7, 8 | |
| X | US-A-4 086 616 (CATANO et al.) <br><br> * Spalte 2, Zeile 46 - Spalte 3, Zeile 8; Spalte 4, Zeile 36 - Spalte 5, Zeile 65; Figur 1 * | 1,2,4, 9 | |
| A | | 3,5-8 | |
| X | NAVY TECHNICAL DISCLOSURE BULLETIN, BAND 3; Nr. 7, Juli 1978, Seiten 1-4; R.W. PIERCE "Multi spectral imaging system" * Seiten 1-4; Figur * | 1,2,4, 5,7 | RECHERCHIERTE SACHGEBIETE (Int. Cl.4) <br><br> H 04 N 5/00 |
| A | | 3,8,9 | |
| A | US-A-3 976 882 (VAN BUSKIRK) <br> * Spalte 1, Zeilen 11-26; Ansprüche 3, 4 * | 2-4 | |

Der vorliegende Recherchenbericht wurde für alle Patentansprüche erstellt.

| Recherchenort BERLIN | Abschlußdatum der Recherche 17-09-1985 | Prüfer DUDLEY C. |
|---|---|---|